(19) **Europäisches Patentamt / European Patent Office / Office européen des brevets**

(11) **EP 4 725 979 A1**

(12) **EUROPEAN PATENT APPLICATION**
published in accordance with Art. 153(4) EPC

(43) Date of publication:
**15.04.2026 Bulletin 2026/16**

(21) Application number: **24872797.6**

(22) Date of filing: **12.09.2024**

(51) International Patent Classification (IPC):
$C08J\ 3/24^{(2006.01)}$    $C08J\ 3/12^{(2006.01)}$
$C08K\ 5/20^{(2006.01)}$    $C08L\ 83/06^{(2006.01)}$
$C08L\ 83/12^{(2006.01)}$    $C08L\ 33/00^{(2006.01)}$

(52) Cooperative Patent Classification (CPC):
C08J 3/12; C08J 3/24; C08K 5/20; C08L 33/00;
C08L 83/06; C08L 83/12

(86) International application number:
**PCT/KR2024/013846**

(87) International publication number:
**WO 2025/071089 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 27.09.2023 KR 20230131047
10.09.2024 KR 20240123329

(71) Applicant: LG Chem, Ltd.
Seoul 07336 (KR)

(72) Inventors:
• **LEE, Serin**
Daejeon 34122 (KR)
• **JEONG, Jiyoon**
Daejeon 34122 (KR)
• **CHO, Joonil**
Daejeon 34122 (KR)
• **YANG, Seung Hun**
Daejeon 34122 (KR)

(74) Representative: **Goddar, Heinz J.**
**Boehmert & Boehmert**
**Anwaltspartnerschaft mbB**
**Pettenkoferstrasse 22**
**80336 München (DE)**

(54) **SUPER ABSORBENT POLYMER AND PREPARATION METHOD THEREOF**

(57) Provided are a superabsorbent polymer and a preparation method thereof, more particularly, a superabsorbent polymer, of which absorbency under pressure, liquid permeability, and gel strength are improved at the same time by including a specific chelating compound inside a base polymer particle and including a modified silicone compound in a surface-crosslinked layer of the base polymer particle, and a preparation method thereof.

**EP 4 725 979 A1**

**Description**

[Technical Field]

Cross-reference to Related Application

The present application is based on, and claims priority from, Korean Patent Application Nos. 10-2023-0131047 and 10-2024-0123329, filed on September 27, 2023 and September 10, 2024, respectively, the disclosures of which are hereby incorporated by reference herein in their entirety.

The present invention relates to a superabsorbent polymer and a preparation method thereof. More particularly, the present invention relates to a superabsorbent polymer, of which absorbency under pressure, liquid permeability, and gel strength are improved at the same time by including a specific chelating compound inside a base polymer particle and including a modified silicone compound in a surface-crosslinked layer of the base polymer, and a preparation method thereof.

[Background Art]

A superabsorbent polymer (SAP) is a synthetic polymeric material capable of absorbing moisture from 500 to 1000 times its own weight. Various manufacturers have denominated it as different names, such as SAM (Super Absorbency Material), AGM (Absorbent Gel Material), etc. Since such superabsorbent polymers started to be practically applied in sanitary items, and they are now being widely used for water retaining soil products for gardening, water stop materials for the civil engineering and construction, sheets for raising seedling, fresh-keeping agents for food distribution fields, materials for poultices, or the like.

In most cases, these superabsorbent polymers have been widely used in the field of hygienic materials such as diapers or sanitary pads, etc. Inside the hygienic materials, the superabsorbent polymer is generally distributed throughout pulp. However, recent efforts have been continuously made to provide hygienic materials such as diapers having a thinner thickness, etc., and as part of that, diapers having a reduced content of pulp, and furthermore, diapers having no pulp, so-called pulpless diapers are actively under development.

As described above, such a hygienic material having a reduced content of pulp or having no pulp includes the superabsorbent polymer at a relatively high ratio, and the superabsorbent polymer particles are inevitably included as multiple layers in the hygienic materials. In order to allow the whole superabsorbent polymer particles included as multiple layers to more efficiently absorb a large amount of liquid such as urine, etc., it is necessary that the superabsorbent polymer basically exhibits high absorption performance as well as high absorption rate.

In addition, when the superabsorbent polymer is included in hygienic materials such as diapers, etc., it is necessary to diffuse urine as widely as possible even in an environment pressurized by a user's weight. Through this, it is possible to further improve the absorption performances and absorption rate of hygienic materials by wholly utilizing superabsorbent polymer particles contained in the entire area of an absorption layer of the hygienic material. Further, due to such diffusion property under pressure, it is possible to further improve a rewetting property of diapers, which prevents urine once absorbed by the superabsorbent polymer from being re-exuded. In addition, it is possible to improve a leakage suppression property of diapers.

Previously, attempts have been made to improve the property of widely diffusing urine by changing the design of hygienic materials such as diapers, etc. For example, there have been attempts to improve diffusion property of urine, and the like, by introducing an acquisition distribution layer (ADL) into hygienic materials, or by applying an absorption channel.

However, improvement in diffusion property by such design change of hygienic materials was not sufficient. Furthermore, recently, since hygienic materials become thinner and the content of superabsorbent polymer in hygienic materials is relatively increased, there is a limitation in improving the diffusion property only by design changes of the hygienic materials themselves. There is an increasing need to improve the diffusion property of the superabsorbent polymer itself under pressure.

Due to these technical demands, there is an increasing need for the development of superabsorbent polymers, in which liquid permeability under pressure, which is directly related to the diffusion property under pressure, may be further improved, thereby more improving rewetting property and leakage suppression property of hygienic materials such as diapers, etc.

[Disclosure]

[Technical Problem]

Accordingly, there are provided a superabsorbent polymer, of which absorbency under pressure, liquid permeability, and gel strength are improved at the same time by including a specific chelating compound inside a base polymer particle and including a modified silicone compound in a surface-crosslinked layer of the base polymer, and a preparation method thereof.

[Technical Solution]

To solve the above problem, there is provided a superabsorbent polymer including: base polymer particles including a crosslinked polymer in which a water-soluble ethylenically unsaturated monomer having an acidic group, of which at least a part is neutralized, is crosslinked in the presence of an aminocarboxylic acid-based metal chelating agent; and

a surface-crosslinked layer which is formed by additionally crosslinking the crosslinked polymer via a surface crosslinking agent on a part of the surface of the base polymer particles,
wherein at least one of the interior or surface of the surface-crosslinked layer includes a modified silicone compound,
the modified silicone compound has a polysiloxane main chain, and
at least one of side chains or terminals of the polysiloxane includes one or more carboxylic acid groups or polyether groups.

Further, according to another exemplary embodiment of the present invention, there is provided a method of preparing the above-described superabsorbent polymer, the method including the steps of:

forming a water-containing gel polymer by crosslinking a water-soluble ethylenically unsaturated monomer having an acidic group, of which at least a part is neutralized, in the presence of an aminocarboxylic acid-based metal chelating agent (step 1);
forming base polymer particles by drying, pulverizing, and size-sorting the water-containing gel polymer (step 2);
preparing a surface crosslinking mixture by mixing the base polymer particles with a surface crosslinking composition (step 3); and
forming a surface-crosslinked layer on a part of the surface of the base polymer particles by heat-treating the surface crosslinking mixture (step 4);
wherein the modified silicone compound is added to at least one step of the step 3 and the step 4, or after the step 4,
the modified silicone compound has a polysiloxane main chain, and
at least one of side chains or terminals of the polysiloxane includes one or more carboxylic acid groups or polyether groups.

[Effect of the Invention]

Provided are a superabsorbent polymer, of which absorbency under pressure, liquid permeability, and gel strength are improved at the same time by including a specific chelating compound inside a base polymer particle and including a modified silicone compound in a surface-crosslinked layer of the base polymer, and a preparation method thereof.

[Best Mode for Carrying Out the Invention]

The terms used in this description are just for explaining exemplary embodiments and it is not intended to restrict the present invention.
The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components, or combinations thereof beforehand.
The terms "the first", "the second", "the third" and the like are used to describe a variety of components, and these terms are merely employed to differentiate one component from other components.
The present invention may be variously modified and have various forms, and specific exemplary embodiments are exemplified and explained in detail in the following description. However, it is not intended to limit the present invention to the specific exemplary embodiments, and it must be understood that the present invention includes every modifications, equivalents, or replacements included in the spirit and technical scope of the present invention.
As used herein, the term "polymer" means a polymerized state of water-soluble ethylenically unsaturated monomers, and may encompass those of all water content ranges or particle size ranges. Among the polymers, those having a water content (a moisture content) of about 40% by weight or more after being polymerized and before being dried may be called a water-containing gel polymer. Particles obtained by pulverizing and drying the water-containing gel polymer may be called a crosslinked polymer.

Further, the term "crosslinked polymer" means those obtained by crosslinking polymerization of the water-soluble ethylenically unsaturated monomers in the presence of an internal crosslinking agent, and the "base polymer particle" means a material including such a crosslinked polymer.

Further, the term "superabsorbent polymer" refers to, depending on the context, a crosslinked polymer obtained by polymerizing a water-soluble ethylenically unsaturated monomer having an acidic group of which at least a part is neutralized, or a base polymer particle obtained by drying the crosslinked polymer, or is used to encompass those made suitable for commercialization by an additional process of the crosslinked polymer or the base polymer, for example, surface crosslinking, reassembling of fine particles, drying, pulverizing, size-sorting, etc.

Further, the term "superabsorbent polymer particle" refers to a particle-phase material including a crosslinked polymer which is obtained by polymerizing a water-soluble ethylenically unsaturated monomer having an acidic group of which at least a part is neutralized and crosslinking the same by an internal crosslinking agent.

**(Superabsorbent polymer)**

A superabsorbent polymer according to one embodiment of the present invention includes base polymer particles including a crosslinked polymer in which a water-soluble ethylenically unsaturated monomer having an acidic group, of which at least a part is neutralized, is crosslinked in the presence of an aminocarboxylic acid-based metal chelating agent; and a surface-crosslinked layer which is formed by additionally crosslinking the crosslinked polymer via a surface crosslinking agent on a part of the surface of the base polymer particles, wherein at least one of the interior or surface of the surface-crosslinked layer includes a modified silicone compound, the modified silicone compound has a polysiloxane main chain, and at least one of side chains or terminals of the polysiloxane includes one or more carboxylic acid groups or polyether groups.

Recently, with regard to superabsorbent polymers, the improvement of not only basic absorption properties but also rewetting property that prevents absorbed urine from being re-exuded when hygienic materials such as diapers, etc. are actually used has become an important measure for assessing product quality. In order to improve the above rewetting property, it is required that all of the properties, such as absorbency under pressure, liquid permeability, gel strength, etc., satisfy an appropriate level or higher, but there has been a problem that it is difficult to improve all three properties at the same time due to their trade-off relationship.

Accordingly, the present inventors found that when a specific chelating agent is used in the step of forming a water-containing gel polymer, the chelating agent is introduced into the inside of base polymer particles, thereby preventing gel deterioration and maintaining gel strength, and when a modified silicone compound is used in the step of forming a surface-crosslinked layer, the modified silicone compound is introduced into at least one of the inside or the surface of the surface-crosslinked layer to improve liquid permeability without using a large amount of a liquid permeability-improving compound, thereby implementing the effect of improving liquid permeability without reducing the effect of the chelating agent, and as a result, absorbency under pressure, liquid permeability, and gel strength of the absorbent polymer may be improved at the same time, thereby completing the present invention.

Hereinafter, each component of the superabsorbent polymer according to one embodiment of the present invention will be described in detail.

The superabsorbent polymer according to one embodiment of the present invention includes base polymer particles including a crosslinked polymer in which a water-soluble ethylenically unsaturated monomer having an acidic group, of which at least a part is neutralized, is crosslinked in the presence of an aminocarboxylic acid-based metal chelating agent. The base polymer particle may refer to a particle-type material including the crosslinked polymer of the water-soluble ethylenically unsaturated monomer.

The aminocarboxylic acid-based metal chelating agent entraps metal ions that are included in the base polymer to cause gel deterioration, thereby preventing gel deterioration and improving gel strength. In particular, when used together with the modified silicone compound included in the surface-crosslinked layer, it enables the use of a minimum amount of metal compounds that are generally used to improve liquid permeability, thereby implementing the effect of improving liquid permeability without lowering gel strength simultaneously. Ultimately, the absorbency under pressure, liquid permeability, and gel strength of the absorbent resin may be improved at the same time, and the rewetting property may be improved to further enhance the quality of a product to which the polymer is applied.

The above aminocarboxylic acid-based metal chelating agent may be, for example, at least one selected from the group consisting of ethylenediaminetetraacetic acid, diethylenetriaminepentaacetic acid, hydroxyethylenediaminetriacetic acid, triethylenetetraminehexaacetic acid, trans-1,2-diaminocyclohexanetetraacetic acid, and metal salts thereof, and preferably, ethylenediaminetetraacetic acid (EDTA), diethylenetriaminepentaacetic acid (DTPA), and alkali metal salts thereof.

The aminocarboxylic acid-based metal chelating agent may be included in an amount of 50 ppmw to 5,000 ppmw with respect to the water-soluble ethylenically unsaturated monomer, and the above content range is suitable for implementing the above-described effect. Preferably, it may be included in an amount of 100 ppmw to 2,000 ppmw, 200 ppmw to 1,500 ppmw, or 300 ppmw to 1,000 ppmw.

The crosslinked polymer is a water-containing gel polymer formed by crosslinking the water-soluble ethylenically unsaturated monomer having an acidic group, of which at least a part is neutralized, in the presence of the aminocarboxylic acid-based metal chelating agent, and the polymerization method thereof will be described in more detail in a description of a method of preparing the superabsorbent polymer.

The water-soluble ethylenically unsaturated monomer may be any monomer commonly used in the preparation of superabsorbent polymers. Non-limiting example of the water-soluble ethylenically unsaturated monomer may be a compound represented by the following Chemical Formula 1:

[Chemical Formula 1] $R_1\text{-COOM}^1$

in Chemical Formula 1,

$R_1$ is an alkyl group containing an unsaturated bond and having 2 to 5 carbon atoms, and
$M^1$ is a hydrogen atom, a monovalent or divalent metal, an ammonium group, or an organic amine salt.

Preferably, the monomer may include one or more selected from the group consisting of acrylic acid, methacrylic acid, and a monovalent metal salt thereof, a divalent metal salt thereof, an ammonium salt thereof, and an organic amine salt thereof. As described, when acrylic acid or a salt thereof is used as the water-soluble ethylenically unsaturated monomer, it is advantageous in terms of obtaining a superabsorbent polymer having improved absorbency. In addition, the monomer may include one or more selected from the group consisting of an anionic monomer such as maleic anhydride, fumaric acid, crotonic acid, itaconic acid, 2-acryloyl ethane sulfonic acid, 2-methacryloyl ethane sulfonic acid, 2-(meth) acryloyl propane sulfonic acid, or 2-(meth)acrylamide-2-methylpropane sulfonic acid, and a salt thereof; a nonionic hydrophilic monomer such as (meth)acrylamide, N-substituted (meth)acrylate, 2-hydroxyethyl(meth)acrylate, 2-hydroxypropyl(meth)acrylate, methoxypolyethyleneglycol(meth)acrylate, or polyethyleneglycol(meth)acrylate; and an unsaturated monomer containing an amino group such as (N,N)-dimethylaminoethyl(meth)acrylate or (N,N)-dimethylaminopropyl(meth)acrylamide, and a quaternary compound thereof.

Here, the water-soluble ethylenically unsaturated monomer may have an acidic group, in which at least a part of the acidic group may be partially neutralized with a neutralizing solution. The type of neutralizing solution is not particularly limited, and any basic component commonly used in the art may be used.

In this regard, the degree of neutralization of the monomer may be 40 mol% to 95 mol%, or 40 mol% to 80 mol%, or 45 mol% to 75 mol%. The range of the degree of neutralization may vary depending on the final physical properties. An excessively high degree of neutralization causes the neutralized monomers to be precipitated, and thus polymerization may not readily occur. On the contrary, an excessively low degree of neutralization not only greatly deteriorates the absorbency of the polymer but also endows the polymer with hard-to-handle properties, like elastic rubber.

Next, the superabsorbent polymer according to one embodiment of the present invention includes the surface-crosslinked layer which is formed by additionally crosslinking the crosslinked polymer via a surface crosslinking agent on a part of the surface of the base polymer particles. Here, at least one of the interior or surface of the surface-crosslinked layer includes a modified silicone compound.

The modified silicone compound is included in the surface-crosslinked layer, which enables the use of a minimum amount of a metal compound, which is usually used to improve liquid permeability, thereby improving liquid permeability without lowering gel strength. In particular, in addition to the effect of improving gel strength by the chelating agent included inside the base polymer, it simultaneously improves the absorbency under pressure, liquid permeability, and gel strength of the absorbent polymer, and ultimately improves the rewetting property, thereby further improving the quality of a product to which the polymer is applied.

The modified silicone compound has a polysiloxane main chain, wherein at least one of side chains or terminals of the polysiloxane includes one or more carboxylic acid groups or polyether groups. In other words, the modified silicone compound means a carboxy modified silicone compound or a polyether modified silicone compound.

The polysiloxane main chain may generally means a polymer having a main chain composed of silicon and oxygen, and water solubility of the compound may be imparted by the carboxylic acid group or polyether group in the side chain or terminal of the polysiloxane.

The modified silicone compound may be included in an amount of 0.001 part by weight to 0.1 part by weight with respect to the base polymer particle, and the above content range is suitable for implementing the above-described effect. Preferably, it may be included in an amount of 0.0015 parts by weight to 0.07 parts by weight, 0.003 parts by weight to 0.005 parts by weight.

As used herein, the term "surface crosslinking agent" is used to distinguish it from an "internal crosslinking agent" which is used in the step of polymerizing the base polymer, and refers to the content described in the method of preparing the polymer described below. The crosslinking occurs regardless of the surface or inside. However, through the surface crosslinking process of the base polymer, the particle surface of the finally prepared superabsorbent polymer has a structure crosslinked by the surface crosslinking agent, and the inside thereof has a structure crosslinked by the internal crosslinking agent.

The surface crosslinking agent may include one or more selected from the group consisting of polyhydric alcohols; epoxy compounds; polyamine compounds; haloepoxy compounds; condensation products of haloepoxy compounds; oxazoline compounds; mono-, di- or polyoxazolidinone compounds; cyclic urea compounds; multivalent metal salts; and alkylene carbonate compounds.

Specifically, examples of polyhydric alcohols may include one or more selected from the group consisting of mono-, di-, tri-, tetra- or polyethylene glycol, monopropylene glycol, 1,3-propanediol, dipropylene glycol, 2,3,4-trimethyl-1,3-pentanediol, polypropylene glycol, glycerol, polyglycerol, 2-butene-1,4-diol, 1,4-butanediol, 1,3-butanediol, 1,5-pentanediol, 1,6-hexanediol, and 1,2-cyclohexandimethanol.

Further, the epoxy compounds may include ethylene glycol diglycidyl ether and glycidol, etc., and the polyamine compounds may include one or more selected from the group consisting of ethylene diamine, diethylene triamine, triethylene tetramine, tetraethylene pentamine, pentaethylene hexamine, polyethyleneimine, and polyamide polyamine.

Further, the haloepoxy compounds may include epichlorohydrin, epibromohydrin, and $\alpha$-methyl epichlorohydrin. Meanwhile, the mono-, di- or poly-oxazolidinone compounds may be exemplified by 2-oxazolidinone, etc.

Further, the alkylene carbonate compounds may include ethylene carbonate, etc. These compounds may be used alone or in combination thereof. Meanwhile, in order to increase the efficiency of the surface crosslinking process, one or more polyhydric alcohol compounds having 2 to 10 carbon atoms among these surface crosslinking agents may be included to be used.

The content of the surface crosslinking agent may be appropriately selected according to the kind of surface crosslinking agents to be added or reaction conditions. However, it may be commonly used in an amount of about 0.001 part by weight to about 5 parts by weight, preferably, about 0.01 part by weight to about 3 parts by weight, and more preferably, about 0.05 parts by weight to about 2 parts by weight with respect to 100 parts by weight of the base polymer particle.

When the content of the surface crosslinking agent is too small, a surface crosslinking reaction may hardly occur, and when the content exceeds 5 parts by weight with respect to 100 parts by weight of the base polymer particle, absorption capacity and physical properties may deteriorate, due to progression of excessive surface crosslinking reaction.

With regard to the superabsorbent polymer according to one embodiment of the present invention, absorbency under pressure, liquid permeability, and gel strength may be improved at the same time due to use of the aminocarboxylic acid-based metal chelating agent inside the above-described base polymer and the modified silicone compound of the surface-crosslinked layer.

With regard to the superabsorbent polymer, a centrifuge absorbency under pressure (AUP) of 0.7 psi may be 13.0 g/g or more according to the EDANA method WSP 242.3-10, preferably, 13.1 g/g or more, 13.3 g/g or more, 13.5 g/g or more, 14 g/g or more, 14.2 g/g or more, and 30 g/g or less, 27 g/g or less, or 24 g/g or less, and 13.0 g/g to 30 g/g, 13.5 g/g to 27 g/g or 14.0 g/g to 24 g/g.

A more detailed measurement method will be described in Experimental Example below.

The superabsorbent polymer may have a liquid permeability of 180 seconds or less, as determined according to the following Equation 1, preferably, 150 seconds or less, or 130 seconds or less. The lower limit of the liquid permeability may be 0 second or more, 50 seconds or more, or 80 seconds or more.

[Equation 1]

$$\text{Liquid permeability (sec)} = T1 - B$$

in Equation 1,

T1 represents the time taken for a liquid level to decrease from 40 ml to 20 ml, when $0.2 \pm 0.0005$ g of a superabsorbent polymer sample is put in a chromatography column with a glass filter, saline is applied to a saline volume of 50 ml and left for 30 minutes, and then a piston with a weight (0.3 psi) is placed and left for 1 minute, and a lower valve is opened, and

B represents the time taken for the liquid level to decrease from 40 ml to 20 ml, when the piston with the weight (0.3 psi) is placed in the chromatography column filled with saline.

Here, the saline means an aqueous solution of 0.9% wt sodium chloride (NaCl), and a more detailed measurement method will be described in Experimental Example below.

In addition, the superabsorbent polymer may have a gel strength of 0.70 N or more, as measured by immersing 2.5 g of the superabsorbent polymer sample in 50 g of ascorbic acid saline and allowing to swell in an oven at 40°C for 24 hours, and then measuring the swollen superabsorbent polymer using a tensile and compression testing machine. Preferably, the gel strength may be 0.75 N or more, 0.80 N or more, or 0.70 N to 2.0 N, 0.75 N to 1.8 N, 0.80 N to 1.5 N.

Here, ascorbic acid saline means an aqueous solution of 0.9 wt% sodium chloride (NaCl) and 0.005 wt% ascorbic acid, and a more detailed measurement method will be described in Experimental Example below.

Further, the superabsorbent polymer may have a particle size of 150 $\mu$m to 850 $\mu$m. More specifically, at least 95% by weight or more of the superabsorbent polymer may have a particle size of at 150 $\mu$m to 850 $\mu$m, and may include 50% by weight or more of particles having a particle size of 300 $\mu$m to 600 $\mu$m, and less than 3% by weight of fine particles having a particle size of less than 150 $\mu$m.

**(Method of preparing superabsorbent polymer)**

A method of preparing the superabsorbent polymer according to one embodiment of the present invention includes the steps of forming a water-containing gel polymer by crosslinking a water-soluble ethylenically unsaturated monomer having an acidic group, of which at least a part is neutralized, in the presence of an aminocarboxylic acid-based metal chelating agent (step 1); forming base polymer particles by drying, pulverizing, and size-sorting the water-containing gel polymer (step 2); preparing a surface crosslinking mixture by mixing the base polymer particles with a surface crosslinking composition (step 3); and forming a surface-crosslinked layer on a part of the surface of the base polymer particles by heat-treating the surface crosslinking mixture (step 4). Here, the modified silicone compound is added to at least one step of the step 3 and the step 4, or after the step 4. Here, the modified silicone compound has a polysiloxane main chain, and at least one of side chains or terminals of the polysiloxane includes one or more carboxylic acid groups or polyether groups.

**(Step 1: Step of polymerizing)**

First, included is the step of forming a water-containing gel polymer by crosslinking a water-soluble ethylenically unsaturated monomer having an acidic group, of which at least a part is neutralized, in the presence of an aminocarboxylic acid-based metal chelating agent (Step 1).

In the polymerization step, an internal crosslinking agent and a polymerization initiator may be used together with the aminocarboxylic acid-based metal chelating agent, and specifically, the step is a step of forming the water-containing gel polymer by performing thermal polymerization or photopolymerization of a monomer composition including the chelating agent, the internal crosslinking agent, the polymerization initiator, and the monomer mixture. The aforementioned descriptions may be equally applied to descriptions of the chelating agent and the monomer.

As used herein, the term "internal crosslinking agent" is used to distinguish it from the "surface crosslinking agent" for crosslinking the surface of the base polymer particle, and functions to polymerize the above-described water-soluble ethylenically unsaturated monomers by crosslinking the unsaturated bonds thereof. The crosslinking in the above step occurs regardless of the surface or inside. However, through the surface crosslinking process of the base polymer described below, the particle surface of the finally prepared superabsorbent polymer has a structure crosslinked by the surface crosslinking agent, and the inside thereof has a structure crosslinked by the internal crosslinking agent.

As the internal crosslinking agent, multifunctional components may be used, and for example, one or more selected from the group consisting of N,N'-methylenebisacrylamide, trimethylolpropane tri(meth)acrylate, ethylene glycol di(meth)acrylate, polyethylene glycol(meth)acrylate, propylene glycol di(meth)acrylate, polypropylene glycol(meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triallylamine, ethylene glycol diglycidyl ether, propylene glycol, glycerin, and ethylene carbonate may be used. Preferably, ethylene glycol diglycidyl ether may be used.

The internal crosslinking agent may be used in an amount of 50 ppmw to 1,000 ppmw with respect to the weight of the water-soluble ethylenically unsaturated monomer. When included in the above content range, a strength of an appropriate level or higher may be achieved by sufficient crosslinking, and the introduction of the appropriate crosslinking structure enables sufficient water retention capacity to be achieved. Preferably, it may be included in an amount of 100 ppmw or more, 200 ppmw or more, 300 ppmw or more, or 600 ppmw or more, and 1,000 ppmw or less, or 800 ppmw or less, and 200 ppmw to 1,000 ppmw, 200 ppmw to 800 ppmw, or 600 ppmw to 800 ppmw. When the content of the internal crosslinking agent is too low, crosslinking does not occur sufficiently, making it difficult to implement the strength of the appropriate level or higher, and drying efficiency is significantly reduced, and when the content of the internal crosslinking agent is too high, the internal crosslinking density increases, making it difficult to implement the desired water retention capacity.

As the polymerization initiator, a thermal polymerization initiator and/or a photopolymerization initiator may be used.

As the thermal polymerization initiator, one or more compounds selected from the group consisting of persulfate-based initiators, azo-based initiators, hydrogen peroxide, and ascorbic acid may be used. Specifically, the persulfate-based initiators may be exemplified by sodium persulfate ($Na_2S_2O_8$), potassium persulfate ($K_2S_2O_8$), ammonium persulfate ($(NH_4)_2S_2O_8$) or the like. The azo-based initiators may be exemplified by 2,2-azobis(2-amidinopropane) dihydrochloride, 2,2-azobis-(N,N-dimethylene)isobutyramidine dihydrochloride, 2-(carbamoylazo)isobutylonitrile, 2,2-azobis[2-(2-imidazolin-2-yl)propane] dihydrochloride, 4,4-azobis-(4-cyanovaleric acid) or the like. More various thermal polymerization initiators are disclosed in "Principle of Polymerization(Wiley, 1981)" written by Odian, p203, which may be served as a reference.

Further, as the polymerization initiator, a photopolymerization initiator may be used, in addition to the above-described thermal polymerization initiator.

The photopolymerization initiator may include, for example, one or more compounds selected from the group consisting of benzoin ether, dialkyl acetophenone, hydroxyl alkyl ketone, phenyl glyoxylate, benzyl dimethyl ketal, acyl phosphine, and $\alpha$-aminoketone. Among them, specific examples of the acylphosphine may include diphenyl(2,4,6-trimethylbenzoyl)phosphine oxide, phenylbis(2,4,6-trimethylbenzoyl)phosphine oxide, ethyl (2,4,6-trimethylbenzoyl) phenylphosphinate or the like. More various photopolymerization initiators are well disclosed in "UV Coatings: Basics, Recent Developments and New Application (Elsevier, 2007)" written by Reinhold Schwalm, p 115, but are not limited thereto.

The polymerization initiator may be included in an amount of 500 ppmw to 10,000 ppmw with respect to the weight of the water-soluble ethylenically unsaturated monomer, preferably, in an amount of 500 ppmw or more, 750 ppmw or more, 800 ppmw or more, or 1,000 ppmw or more, and 10,000 ppmw or less, 8,000 ppmw or less, 7,000 ppmw or less, 5,000 ppmw or less, 3,000 ppmw or less, 1,500 ppmw or less, or 1,000 ppmw or less, and 500 ppmw to 8,000 ppmw, 500 ppmw to 5,000 ppmw, 750 ppmw to 3,000 ppmw or 800 ppmw to 1,500 ppmw, and the aforementioned effects may be further improved within the above range. The content of the polymerization initiator means the content of the mixture of the thermal polymerization initiator and the photopolymerization initiator when they are used together.

In addition, the monomer composition may further include additives such as a foaming agent, a thickener, a plasticizer, a preservation stabilizer, an antioxidant, a surfactant, etc., which are commonly used in the art, as needed.

The foaming agent causes foaming during polymerization to generate pores inside the water-containing gel polymer, thereby increasing the surface area. As the foaming agent, carbonate may be used, and for example, sodium bicarbonate, sodium carbonate, potassium bicarbonate, potassium carbonate, calcium bicarbonate, calcium carbonate, magnesium bicarbonate, or magnesium carbonate may be used. As an applicable commercial foaming agent, an encapsulated foaming agent F-36D may be used, but is not limited thereto.

Further, it is preferable that the foaming agent is used in an amount of 1,500 ppmw or less with respect to the weight of the water-soluble ethylenically unsaturated monomer. When the amount of use of the foaming agent used is more than 1,500 ppmw, pores may excessively increase, and thus gel strength of superabsorbent polymer may be lowered and density may decrease, thereby causing distribution and storage problems. Further, it is preferable that the foaming agent is used in an amount of 500 ppmw or more, or 1,000 ppmw or more with respect to the weight of the water-soluble ethylenically unsaturated monomer.

Further, such a monomer composition may be prepared in the form of a solution in which the above-described raw materials including the internal crosslinking agent, water-soluble ethylenically unsaturated monomer, polymerization initiator, etc., are dissolved in a solvent.

In this regard, as the solvent to be applicable, any solvent may be used without limitations in the composition as long as it is able to dissolve the above-described raw materials. For example, as the solvent, water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate, N,N-dimethylacetamide, or a mixture thereof may be used.

The step of forming the water-containing gel polymer through the polymerization of the monomer composition may be performed by a common polymerization method, and a process thereof is not particularly limited. For non-limiting example, the polymerization method is largely classified into thermal polymerization and photopolymerization according to a polymerization energy source. The thermal polymerization may be carried out in a reactor like a kneader equipped with agitating spindles. The photopolymerization may be carried out in a reactor equipped with a movable conveyor belt.

For example, the monomer composition is injected to the reactor like the kneader equipped with the agitating spindles, and thermal polymerization is carried out by providing hot air thereto or by heating the reactor, thereby obtaining the water-containing gel polymer. In this regard, the water-containing gel polymer may be obtained as particles having a size of millimeters or centimeters when it is discharged from an outlet of the reactor, according to the type of agitating spindles equipped in the reactor. Specifically, the water-containing gel polymer may be obtained in various forms according to a concentration of the monomer composition fed thereto, a feeding speed or the like, and the water-containing gel polymer having a (weight average) particle size of 2 mm to 50 mm may be generally obtained.

For another example, when the monomer composition is subjected to photopolymerization in the reactor equipped with the movable conveyor belt, the water-containing gel polymer may be obtained in a sheet-type. In this regard, the thickness of the sheet may vary according to the concentration of the monomer composition fed thereto and the feeding speed. The sheet is preferably controlled to have a thickness of 0.5 cm to 10 cm in order to assure the production speed while allowing the entire sheet to be uniformly polymerized.

The water-containing gel polymer obtained by such a method may exhibit a water content of 40% by weight to 80% by weight. Meanwhile, throughout the present specification, the "water content" means a weight occupied by water with respect to the total weight of the water-containing gel polymer, which may be a value obtained by subtracting the weight of the dried polymer from the weight of the water-containing gel polymer. Specifically, the water content may be defined as a value calculated by measuring the weight loss due to evaporation of moisture in the polymer during the process of drying by raising the temperature of the polymer through infrared heating. At this time, the water content is measured under the drying conditions as follows: the temperature is raised from room temperature to 180°C and then the temperature is maintained at 180°C, and the total drying time is set to 20 minutes, including 5 minutes for the temperature rising step.

**(Step 2: Step of drying, pulverizing and size-sorting)**

Next, the method of preparing the superabsorbent polymer according to one embodiment of the present invention includes the step of forming base polymer particles by drying, pulverizing, and size-sorting the prepared water-containing gel polymer (step 2).

Specifically, the step of drying the obtained water-containing gel polymer is performed. As needed, the step of coarsely pulverizing (chopping) the water-containing gel polymer may be performed before drying, in order to increase efficiency of the drying step.

In this regard, a pulverizer to be used may include, but is not limited to configuration, specifically, any one selected from the group consisting of a vertical pulverizer, a turbo cutter, a turbo grinder, a rotary cutter mill, a cutter mill, a disc mill, a shred crusher, a crusher, a chopper, and a disc cutter, but is not limited thereto.

In this regard, the step of coarsely pulverizing may be performed such that the water-containing gel polymer has a particle size of 2 mm to 10 mm. Due to the high water content, it is technically not easy to pulverize the water-containing gel polymer into a particle size of less than 2 mm, and a phenomenon of agglomeration between the pulverized particles may occur. On the contrary, when the polymer is pulverized at a particle size of more than 10 mm, the effect of increasing the efficiency of the subsequent drying step may be unsatisfactory.

The water-containing gel polymer coarsely pulverized as above or immediately after polymerization without the step of coarsely pulverizing is subjected to drying. In this regard, the drying temperature of the drying step may be 150°C to 250°C. When the drying temperature is lower than 150°C, the drying time becomes excessively long, and the physical properties of the superabsorbent polymer finally formed may deteriorate. When the drying temperature is higher than 250°C, only the surface of the polymer is excessively dried, and thus fine particles may be generated during the subsequent pulverization process, and the physical properties of the superabsorbent polymer finally formed may deteriorate. Preferably, the drying may be carried at a temperature of about 150°C to about 200°C, and more preferably at a temperature of about 150°C to about 190°C.

The drying time may be 20 minutes to 90 minutes in consideration of process efficiency, etc., but is not limited thereto.

Meanwhile, the drying step may be performed by a multi-stage process within the above-mentioned temperature range.

With regard to the drying method of the drying step, any method may be selected and used without limitation in the constitution as long as it may be commonly used in the process of drying the water-containing gel polymer. Specifically, the drying step may be carried out by a method of supplying hot air, irradiating infrared rays, irradiating microwaves, irradiating ultraviolet rays or the like. The hot air supply may be conducted by a method of using an oven capable of transferring air volume up and down.

The water content of the polymer after carrying out the drying step may be about 0.1% by weight to about 10% by weight.

Next, the step of pulverizing the dried polymer obtained through the drying step may be carried out.

The polymer obtained after the step of pulverizing may have a particle size of 150 $\mu$m to 850 $\mu$m. A pulverizer used to pulverize into such a particle size may specifically include a pin mill, a hammer mill, a screw mill, a roll mill, a disc mill, a jog mill, or the like, but the present invention is not limited to the above-described examples.

In order to manage physical properties of the superabsorbent polymer powder finally commercialized after the step of pulverizing, the base polymer particles obtained after pulverizing may undergo a separate process of size-sorting the particles according to the particle size.

Preferably, base polymer particles having a particle size of about 150 μm to about 850 μm are size-sorted, and only the base polymer particles having such a particle size may be subjected to the step of surface crosslinking reaction, and finally commercialized. More specifically, the base polymer particles subjected to size-sorting have a particle size of 150 μm to 850 μm, and may include 50% by weight or more of particles having a particle size of 300 μm to 600 μm, and less than 3% by weight of fine particles having a particle size of less than 150 μm.

**(Step 3 and Step 4: Step of surface crosslinking)**

Next, included are the step of preparing a surface crosslinking mixture by mixing the base polymer particles with a surface crosslinking composition (step 3); and the step of forming a surface-crosslinked layer on a part of the surface of the base polymer particles by heat-treating the surface crosslinking mixture (step 4).

The step of surface crosslinking is to induce a crosslinking reaction on the surface of the base polymer particle in the presence of a surface crosslinking composition including a surface crosslinking agent, and the unsaturated bonds of the water soluble ethylenically unsaturated monomers that are not crosslinked to remain on the surface are crosslinked by the surface crosslinking agent, thereby forming a superabsorbent polymer with increased surface crosslinking density. Specifically, a surface-crosslinked layer may be formed by a heat treatment process in the presence of a surface crosslinking agent, and the heat treatment process increases a surface crosslinking density, i.e., an external crosslinking density, but does not change an internal crosslinking density, and thus the superabsorbent polymer having the prepared surface-crosslinked layer has a structure in which the crosslinking density of the outside is higher than inside.

Here, the modified silicone compound is added in at least one of the step 3 (=before the step of surface crosslinking), the step 4 (=during the step of surface crosslinking), or after the step 4 (=after the step of surface crosslinking), and as a result, the modified silicone compound is included in at least one of the interior or surface of the surface-crosslinked layer.

In other words, as described above, in the step of forming the water-containing gel polymer, the specific chelating agent is used to introduce the chelating agent into the interior of the base polymer particle, thereby preventing the gel from deteriorating and maintaining the gel strength. In the step of forming the surface-crosslinked layer, the modified silicone compound is used to introduce the modified silicone compound into at least one of the interior or surface of the surface-crosslinked layer, thereby improving liquid permeability without using a large amount of a liquid permeability-improving compound, thereby implementing the effect of improving the liquid permeability without reducing the effect of the chelating agent, and as a result, absorbency under pressure, liquid permeability, and gel strength of the absorbent polymer may be improved at the same time.

First, in the step of preparing a surface crosslinking mixture by mixing the base polymer particles with a surface crosslinking composition (step 3), the surface crosslinking composition includes a surface crosslinking agent for surface crosslinking, and may further include water and/or a hydrophilic organic solvent.

The aforementioned descriptions may be equally applied to the components and contents of the surface crosslinking agent which are included in the surface crosslinking composition.

The surface crosslinking composition may include water and/or a hydrophilic organic solvent as a medium. Accordingly, the surface crosslinking agent, etc. may be evenly dispersed in the base polymer particles. In this regard, the content of water and hydrophilic organic solvent may be determined by controlling the addition ratio with respect to 100 parts by weight of the base polymer particles, for the purpose of inducing uniform dissolution/dispersion of the surface crosslinking agent, preventing agglomeration of the base polymer particles, and at the same time, optimizing the surface penetration depth of the surface crosslinking agent.

The surface crosslinking composition may be prepared as a surface crosslinking mixture by mixing with the base polymer particles, and the mixing method thereof is not particularly limited. For example, a method of adding and mixing the surface crosslinking composition and the base polymer particles in a reactor, a method of spraying the surface crosslinking composition onto the base polymer particles, a method of mixing the base polymer particles and the surface crosslinking composition by continuously feeding them to a mixer which is continuously operated, etc. may be used.

Next, the step of forming a surface-crosslinked layer on a part of the surface of the base polymer particles by heat-treating the surface crosslinking mixture (step 4) is included.

The step of forming the surface-crosslinked layer may be performed by heat-treating at a temperature of 110°C to 200°C or 110°C to 150°C for about 30 minutes or more. More specifically, the above-described temperature is determined as the maximum reaction temperature, and the surface crosslinking may be performed by heat treating at the maximum reaction temperature for 30 minutes to 80 minutes, or 40 minutes to 70 minutes.

By meeting these surface crosslinking process conditions (particularly, temperature raising conditions and reaction conditions at the maximum reaction temperature), a superabsorbent polymer appropriately meeting more excellent properties, such as liquid permeability under pressure, etc. may be prepared.

A means for raising temperature for the surface crosslinking reaction is not particularly limited. Heating may be performed by providing a heating medium or by directly providing a heat source. In this regard, the kind of the applicable heating medium may include steam, hot air, a hot fluid such as hot oil or the like, but is not limited thereto. The temperature of the heating medium to be provided may be properly selected in consideration of the means of the heating medium, the heating rate, and the heating target temperature. Meanwhile, as the heat source to be directly provided, an electric heater or a gas heater may be used, but is not limited to these examples.

According to one embodiment of the present invention, in the step of preparing the surface crosslinking mixture (step 3), the modified silicone compound may be further included, and thus the modified silicone compound may be included in the interior and/or on the surface of the surface-crosslinked layer. The aforementioned descriptions may be equally applied to the components and contents of the modified silicone compound.

According to one embodiment of the present invention, in the step of forming the surface-crosslinked layer by heat-treating (step 4), the modified silicone compound may be further included, and thus the modified silicone compound may be included in the interior and/or on the surface of the surface-crosslinked layer. The aforementioned descriptions may be equally applied to the components and contents of the modified silicone compound.

According to one embodiment of the present invention, after the step of forming the surface-crosslinked layer by heat-treating (step 4), the modified silicone compound may be further included, and thus the modified silicone compound may be included on the surface of the surface-crosslinked layer. The aforementioned descriptions may be equally applied to the components and contents of the modified silicone compound.

The process after the step of forming the surface-crosslinked layer by heat-treating (step 4) is not particularly limited, but may performed together with post-treatment processes commonly applied in the field, such as a cooling process, a hydrating process, and a process of injecting additives, but is not limited thereto.

According to one embodiment of the present invention, in at least one step of the step of preparing the surface crosslinking mixture (step 3) or the step of forming the surface-crosslinked layer by heat-treating (step 4), or after the step of forming the surface-crosslinked layer by heat-treating (step 4), the modified silicone compound may be further included, and thus the modified silicone compound may be included in the interior and/or on the surface of the surface-crosslinked layer. The aforementioned descriptions may be equally applied to the components and contents of the modified silicone compound.

Hereinafter, the actions and effects of the present invention will be described in more detail with reference to specific exemplary embodiments of the present invention. However, these exemplary embodiments are provided only for illustrating the present invention, and the scope of the present invention is not limited thereto.

**[Examples and Comparative Examples]**

**Example 1**

(Step 1: Step of polymerizing)

Into a 3-L glass container equipped with a stirrer and a thermometer, 500 g of acrylic acid, 800 ppmw (with respect to 100 parts by weight of acrylic acid) of ethylene glycol diglycidyl ether as an internal crosslinking agent, and 80 ppmw (with respect to 100 parts by weight of acrylic acid) of diphenyl(2,4,6-trimethylbenzoyl)-phosphine oxide as a photopolymerization initiator were introduced and dissolved, and then 627 g of 31.5% caustic soda solution was added to prepare an aqueous solution of water-soluble unsaturated monomers (degree of neutralization: 70 mol%; total solid content: 44.9% by weight). After the temperature of the aqueous solution of water-soluble unsaturated monomers increased due to neutralization heat and became 40°C, this mixed solution was put in a square container (60 cm wide, 60 cm high) containing 1,000 ppmw (with respect to 100 parts by weight of acrylic acid) of sodium persulfate as a thermal polymerization initiator, 800 ppmw (with respect to 100 parts by weight of acrylic acid) of a capsule foaming agent F36D, 800 ppmw (with respect to 100 parts by weight of acrylic acid) of sodium dodecyl sulfate, and 300 ppmw (with respect to 100 parts by weight of acrylic acid) of DTPA-5Na as a chelating agent, and then irradiated by UV (irradiation dose: 10 mV/cm$^2$) for 1 minute to perform UV polymerization, thereby obtaining a water-containing gel polymer sheet.

(Step 2: Step of drying, pulverizing, and size-sorting)

The obtained water-containing gel polymer sheet was passed through a chopper having a hole size of 16 mm to prepare crumb.

Next, the crumb was dried in an oven capable of transferring air volume up and down. The drying was conducted by multistage, and specifically, it was conducted at 170°C for 30 minutes (up flow for 5 minutes - down flow for 5 minutes - up flow for 5 minutes - down flow for 5 minutes - up flow for 5 minutes - down flow for 5 minutes) using an air flow oven. The dry polymer obtained through the drying process was pulverized with a pulverizer, and then size-sorted through an ASTM standard sieve to obtain base polymer particles having a particle size of 150 μm to 850 μm.

(Steps 3 and 4: Step of surface crosslinking)

First, a surface crosslinking composition including 6 parts by weight of water, 3 parts by weight of methanol, 0.1 part by weight of aluminum sulfate, 0.05 parts by weight of ethylene glycol diglycidyl ether (EGDGE) was prepared (with respect to 100 parts by weight of base polymer particles).

Thereafter, a surface crosslinking mixture was prepared, in which 100 parts by weight of the base polymer particles, 9.15 parts by weight of the prepared surface crosslinking composition, and 0.005 parts by weight of a carboxy modified silicone compound (with respect to 100 parts by weight of base polymer particles) were evenly mixed.

The surface crosslinking mixture was supplied to a surface crosslinking reactor, and a surface crosslinking reaction of base polymer particles was performed at 130°C for 40 minutes. Thereafter, 0.05 parts by weight of fumed silica was mixed to obtain a superabsorbent polymer.

**Example 2**

A superabsorbent polymer was prepared in the same manner as in Example 1, except that 800 ppmw (with respect to 100 parts by weight of acrylic acid) of the chelating agent DTPA-5Na was used in the step 1 of polymerizing in Example 1.

**Example 3**

A superabsorbent polymer was prepared in the same manner as in Example 1, except that 1,000 ppmw (with respect to 100 parts by weight of acrylic acid) of EDTA as the chelating agent, instead of DTPA-5Na, was used in the step 1 of polymerizing in Example 1.

**Example 4**

A superabsorbent polymer was prepared in the same manner as in Example 1, except that 0.01 part by weight (with respect to 100 parts by weight of base polymer particles) of the carboxy modified silicone compound was used in the steps 3 and 4 of surface crosslinking in Example 1.

**Example 5**

A superabsorbent polymer was prepared in the same manner as in Example 1, except that 0.005 parts by weight (with respect to 100 parts by weight of base polymer particles) of a polyether modified silicone compound, instead of the carboxy modified silicone compound, was used in the steps 3 and 4 of surface crosslinking in Example 1.

**Comparative Example 1**

A superabsorbent polymer was prepared in the same manner as in Example 1, except that the modified silicone compound was not used in the steps 3 and 4 of surface crosslinking in Example 1.

**Comparative Example 2**

A superabsorbent polymer was prepared in the same manner as in Example 1, except that the chelating agent was not used in the step 1 of polymerizing in Example 1 and the modified silicone compound was not used in the steps 3 and 4 of surface crosslinking in Example 1.

**Comparative Example 3**

A superabsorbent polymer was prepared in the same manner as in Example 1, except that the chelating agent was not used in the step 1 of polymerizing in Example 1.

**Comparative Example 4**

A superabsorbent polymer was prepared in the same manner as in Example 1, except that the chelating agent was not used in the step 1 of polymerizing in Example 1 and 0.03 parts by weight (with respect to 100 parts by weight of base polymer particles) of DTPA-5Na was additionally used in the steps 3 and 4 of surface crosslinking in Example 1.

**Comparative Example 5**

A superabsorbent polymer was prepared in the same manner as in Example 1, except that the chelating agent was not used in the step 1 of polymerizing in Example 1 and 0.03 parts by weight (with respect to 100 parts by weight of base polymer particles) of EDTMP-5Na was additionally used in the steps 3 and 4 of surface crosslinking in Example 1.

**Comparative Example 6**

A superabsorbent polymer was prepared in the same manner as in Example 1, except that 0.005 parts by weight (with respect to 100 parts by weight of base polymer particles) of an epoxy modified silicone compound (KF 101, Shinetsu), instead of the carboxy modified silicone compound, was used in the steps 3 and 4 of surface crosslinking in Example 1.

**Comparative Example 7**

A superabsorbent polymer was prepared in the same manner as in Example 1, except that 0.005 parts by weight (with respect to 100 parts by weight of base polymer particles) of an amino modified silicone compound (KF 808, Shinetsu), instead of the carboxy modified silicone compound, was used in the steps 3 and 4 of surface crosslinking in Example 1.

**[Experimental Example]**

For the superabsorbent polymers including the base polymer, which were prepared in Examples and Comparative Examples, physical properties were evaluated by the following methods, and the results are shown in Table 1.

Unless otherwise indicated, all of the following physical properties were evaluated at room temperature (25 $\pm$1°C), and physiological saline or saline means an aqueous solution of 0.9% wt sodium chloride (NaCl), and ascorbic acid saline means an aqueous solution of 0.9 wt% sodium chloride (NaCl) and 0.005 wt% ascorbic acid.

(1) Centrifuge Retention Capacity (CRC)

From the superabsorbent polymers prepared in Examples and Comparative Examples, particles having a particle size of 150 $\mu$m to 850 $\mu$m were taken, and centrifuge retention capacity (CRC) by absorbency under no load was measured in accordance with European Disposables and Nonwovens Association (EDANA) standard EDANA WSP 241.2.

In detail, each absorbent polymer sample WO(g) (about 0.2 g) obtained through Examples and Comparative Examples was evenly put in a nonwoven fabric-made bag, followed by sealing. Then, the bag was immersed in a physiological saline solution (0.9 wt%) at room temperature. After 30 minutes, water was removed from the bag using a centrifuge at 250 G for 3 minutes, and the weight W2(g) of the bag was then measured. Further, the same procedure was carried out without using the polymer, and then the resultant weight W1(g) was measured. By using the respective weights thus obtained, CRC (g/g) was calculated according to the following Equation 2.

$$[\text{Equation 2}]$$

$$\text{CRC (g/g)} = \{[W2(g) - W1(g)]/W0(g)\} - 1$$

(2) Vortex absorption rate (sec)

From the superabsorbent polymers prepared in Examples and Comparative Examples, particles having a particle size of 150 $\mu$m to 850 $\mu$m were taken, and 2 g of the superabsorbent polymer sample was added to 50 mL of physiological saline, and stirred at 600 rpm, and a time taken for vortex to disappear was measured in seconds.

(3) Absorbency under pressure (AUP)

From the superabsorbent polymers prepared in Examples and Comparative Examples, particles having a particle size of 150 $\mu$m to 850 $\mu$m were taken, and absorbency under pressure (AUP) of 0.7 psi was measured according to the European Disposables and Nonwovens Association (EDANA) method WSP 242.3-10.

First, a 400 mesh stainless steel net was installed in the bottom of a plastic cylinder having an internal diameter of 60 mm. The superabsorbent polymer WO(g) was evenly scattered on the steel net at room temperature and humidity of 50%, and a piston which may evenly provide a load of 0.7 psi was put thereon, in which an external diameter of the piston was slightly smaller than 60 mm, there was no gap between the internal wall of the cylinder and the piston, and the jig-jog of the cylinder was not interrupted. At this time, the weight W3(g) of the apparatus was measured.

After putting a glass filter having a diameter of 90 mm and a thickness of 5 mm in a Petri dish having a diameter of 150 mm, a physiological saline solution composed of 0.9 wt% sodium chloride was poured until the surface level of the physiological saline solution became equal to the upper surface of the glass filter. A sheet of filter paper having a diameter of 90 mm was put thereon. The measurement apparatus was mounted on the filter paper, thereby having the liquid absorbed under the load for 1 hour. 1 hour later, the weight W4(g) was measured after lifting the measurement apparatus. By using the respective weights thus obtained, absorbency under pressure (g/g) was calculated according to the following Equation 3.

$$[\text{Equation 3}]$$

$$AUP(g/g) = [W4(g) - W3(g)]/W0(g)$$

(4) Liquid permeability (sec)

From the superabsorbent polymers prepared in Examples and Comparative Examples, polymer particles size-sorted using a #30-#50 sieve were obtained, and liquid permeability was calculated according to the following Equation 1.

$$[\text{Equation 1}]$$

$$\text{Liquid permeability (sec)} = T1 - B$$

in Equation 1,

T1 represents the time taken for a liquid level to decrease from 40 ml to 20 ml, when 0.2 g of a superabsorbent polymer sample is put in a chromatography column with a glass filter, saline is applied to a saline volume of 50 ml and left for 30 minutes, and then a piston with a weight of 0.3 psi is placed and left for 1 minute, and a lower valve is opened, and B represents the time taken for the liquid level to decrease from 40 ml to 20 ml, when the piston with the weight of 0.3 psi is placed in the chromatography column filled with saline.

(5) Gel strength (N)

From the superabsorbent polymers prepared in Examples and Comparative Examples, particles having a particle size of 150 $\mu$m to 850 $\mu$m were taken, and 2.5 g of the superabsorbent polymer sample was immersed in 50 g of ascorbic acid saline, and allowed to swell in an oven at 40°C for 24 hours. The gel strength of the swollen base polymer particles was measured using a tensile and compression testing machine.

In detail, the swollen base polymer particles were measured using a digital force gauge FGP-2 which is a tensile and compression testing machine. As the tip penetrated, the peak value of the force (N) applied to the tip was measured three times according to the following conditions, and the arithmetic mean value thereof was determined as the gel strength (unit: N).

Tip size: terminal diameter 10$\pm$0.1 mm
Beaker size: 50$\pm$0.1 mm
Penetration speed: 500$\pm$0.5 mm/min

[Table 1]

| Section | CRC (g/g) | Vortex (sec) | AUP (g/g) | Liquid permeability (see) | Gel strength (N) |
|---------|-----------|--------------|-----------|---------------------------|------------------|
| Example 1 | 39.8 | 37 | 14.2 | 123 | 0.79 |
| Example 2 | 39.0 | 38 | 14.4 | 119 | 0.85 |
| Example 3 | 39.3 | 37 | 14.5 | 130 | 0.75 |

(continued)

| Section | CRC (g/g) | Vortex (sec) | AUP (g/g) | Liquid permeability (see) | Gel strength (N) |
|---|---|---|---|---|---|
| Example 4 | 39.7 | 37 | 14.7 | 102 | 0.80 |
| Example 5 | 39.9 | 38 | 14.5 | 130 | 0.78 |
| Comparative Example 1 | 39.7 | 35 | 12.4 | 280 | 0.76 |
| Comparative Example 2 | 39.5 | 37 | 13.1 | 180 | 0.31 |
| Comparative Example 3 | 39.5 | 38 | 14.0 | 180 | 0.34 |
| Comparative Example 4 | 39.4 | 37 | 13.2 | 260 | 0.45 |
| Comparative Example 5 | 39.6 | 37 | 13.3 | 270 | 0.48 |
| Comparative Example 6 | 40.8 | 36 | 11.7 | 340 | 0.50 |
| Comparative Example 7 | 40.9 | 36 | 10.9 | 450 | 0.45 |

As shown in the results of Table 1, it was confirmed that the superabsorbent polymers according to Examples of the present invention may have the improved absorbency under pressure, liquid permeability, and gel strength, which are required for improving rewetting property, at the same time by including the specific chelating compound inside and including the modified silicone compound in the surface-crosslinked layer of the base polymer.

In the case of Comparative Examples, in which one or more of the two components of the present invention are not included or introduced into the different steps, it was difficult to improve absorbency under pressure, liquid permeability, and gel strength at the same time.

**Claims**

1. A superabsorbent polymer comprising:

   base polymer particles including a crosslinked polymer in which a water-soluble ethylenically unsaturated monomer having an acidic group, of which at least a part is neutralized, is crosslinked in the presence of an aminocarboxylic acid-based metal chelating agent; and
   a surface-crosslinked layer which is formed by additionally crosslinking the crosslinked polymer via a surface crosslinking agent on a part of the surface of the base polymer particles,
   wherein at least one of the interior or surface of the surface-crosslinked layer includes a modified silicone compound,
   the modified silicone compound has a polysiloxane main chain, and
   at least one of side chains or terminals of the polysiloxane includes one or more carboxylic acid groups or polyether groups.

2. The superabsorbent polymer of claim 1, wherein the aminocarboxylic acid-based metal chelating agent includes one or more selected from the group consisting of ethylenediaminetetraacetic acid, diethylenetriaminepentaacetic acid, hydroxyethylenediaminetriacetic acid, triethylenetetraminehexaacetic acid, trans-1,2-diaminocyclohexanetetraacetic acid, and metal salts thereof.

3. The superabsorbent polymer of claim 1, wherein the aminocarboxylic acid-based metal chelating agent is included in an amount of 50 ppmw to 5,000 ppmw with respect to the water-soluble ethylenically unsaturated monomer.

4. The superabsorbent polymer of claim 1, wherein the modified silicone compound is included in an amount of 0.001 part by weight to 0.1 part by weight with respect to the base polymer particles.

5. The superabsorbent polymer of claim 1, wherein a centrifuge absorbency under pressure (AUP) of 0.7 psi according to the EDANA method WSP 242.3-10 is 13.0 g/g or more.

6. The superabsorbent polymer of claim 1, wherein liquid permeability determined according to the following Equation 1 is 180 seconds or less:

[Equation 1]

$$\text{Liquid permeability (sec)} = T1 - B$$

in Equation 1,

T1 represents the time taken for a liquid level to decrease from 40 ml to 20 ml, when $0.2\pm0.0005$ g of a superabsorbent polymer sample is put in a chromatography column with a glass filter, saline is applied to a saline volume of 50 ml and left for 30 minutes, and then a piston with a weight of 0.3 psi is placed and left for 1 minute, and a lower valve is opened, and

B represents the time taken for the liquid level to decrease from 40 ml to 20 ml, when the piston with the weight (0.3 psi) is placed in the chromatography column filled with saline.

7. The superabsorbent polymer of claim 1, wherein gel strength is 0.70 N or more, as measured by immersing 2.5 g of the superabsorbent polymer sample in 50 g of ascorbic acid saline, allowing to swell in an oven at 40°C for 24 hours, and then measuring the swollen superabsorbent polymer using a tensile and compression testing machine.

8. A method of preparing the superabsorbent polymer of claim 1, the method comprising the steps of:

forming a water-containing gel polymer by crosslinking a water-soluble ethylenically unsaturated monomer having an acidic group, of which at least a part is neutralized, in the presence of an aminocarboxylic acid-based metal chelating agent (step 1);

forming base polymer particles by drying, pulverizing, and size-sorting the water-containing gel polymer (step 2);

preparing a surface crosslinking mixture by mixing the base polymer particles with a surface crosslinking composition (step 3); and

forming a surface-crosslinked layer on a part of the surface of the base polymer particles by heat-treating the surface crosslinking mixture (step 4);

wherein the modified silicone compound is added to at least one step of the step 3 and the step 4, or after the step 4,

the modified silicone compound has a polysiloxane main chain, and

at least one of side chains or terminals of the polysiloxane includes one or more carboxylic acid groups or polyether groups.

## INTERNATIONAL SEARCH REPORT

| International application No. |
| --- |
| **PCT/KR2024/013846** |

| A. | CLASSIFICATION OF SUBJECT MATTER |
| --- | --- |

**C08J 3/24**(2006.01)i; **C08J 3/12**(2006.01)i; **C08K 5/20**(2006.01)i; **C08L 83/06**(2006.01)i; **C08L 83/12**(2006.01)i; **C08L 33/00**(2006.01)i

According to International Patent Classification (IPC) or to both national classification and IPC

| B. | FIELDS SEARCHED |
| --- | --- |

Minimum documentation searched (classification system followed by classification symbols)

C08J 3/24(2006.01); C08F 2/04(2006.01); C08F 2/44(2006.01); C08J 3/075(2006.01); C08J 3/12(2006.01); C08K 3/013(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 금속 킬레이트 화합물(metallic chelate compound), 함수겔(hydrogel), 가교 (crosslink), 변성 실리콘(modified silicon), 카르복실산기(carboxylic group), 에테르기(ether group), 표면 가교(surface crosslink)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0082510 A (LG CHEM, LTD.) 17 June 2022 (2022-06-17)<br>See claims 1-5; paragraphs [0143]-[0184]; and table 2. | 1-8 |
| Y | JP 2021-181507 A (SANYO CHEM. IND. LTD.) 25 November 2021 (2021-11-25)<br>See paragraphs [0142]-[0172]; and table 1. | 1-8 |
| A | KR 10-2018-0019558 A (NIPPON SHOKUBAI CO., LTD.) 26 February 2018 (2018-02-26)<br>See claims 1-18. | 1-8 |
| A | KR 10-2020-0071320 A (LG CHEM, LTD.) 19 June 2020 (2020-06-19)<br>See claims 1-10. | 1-8 |
| A | KR 10-2016-0117180 A (HANWHA CHEMICAL CORPORATION) 10 October 2016 (2016-10-10)<br>See claims 1-9. | 1-8 |

| ☐ Further documents are listed in the continuation of Box C. | ☑ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **19 December 2024** | **19 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/013846**

| Patent document cited in search report | | | Publication date (day/month/year) | Patent family member(s) | | | Publication date (day/month/year) |
|---|---|---|---|---|---|---|---|
| KR | 10-2022-0082510 | A | 17 June 2022 | None | | | |
| JP | 2021-181507 | A | 25 November 2021 | JP | 2022-009235 | A | 14 January 2022 |
| | | | | JP | 7200323 | B2 | 06 January 2023 |
| | | | | JP | 7234101 | B2 | 07 March 2023 |
| KR | 10-2018-0019558 | A | 26 February 2018 | CN | 107709415 | A | 16 February 2018 |
| | | | | CN | 118005960 | A | 10 May 2024 |
| | | | | CN | 118005961 | A | 10 May 2024 |
| | | | | EP | 3312218 | A1 | 25 April 2018 |
| | | | | JP | 2018-204302 | A1 | 15 February 2018 |
| | | | | JP | 6460495 | B2 | 30 January 2019 |
| | | | | KR | 10-2717404 | B1 | 16 October 2024 |
| | | | | US | 11535689 | B2 | 27 December 2022 |
| | | | | US | 11958921 | B2 | 16 April 2024 |
| | | | | US | 2018-0298132 | A1 | 18 October 2018 |
| | | | | US | 2023-0097487 | A1 | 30 March 2023 |
| | | | | WO | 2016-204302 | A1 | 22 December 2016 |
| KR | 10-2020-0071320 | A | 19 June 2020 | KR | 10-2616695 | B1 | 20 December 2023 |
| KR | 10-2016-0117180 | A | 10 October 2016 | TW | 201700552 | A | 01 January 2017 |
| | | | | TW | I759262 | B | 01 April 2022 |
| | | | | WO | 2016-159600 | A1 | 06 October 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230131047

- KR 1020240123329

**Non-patent literature cited in the description**

- **ODIAN**. Principle of Polymerization. Wiley, 1981, 203

- **REINHOLD SCHWALM**. UV Coatings: Basics, Recent Developments and New Application. Elsevier, 2007, 115